Europäisches Patentamt

(19) European Patent Office

Office européen des brevets

(11) Publication number: **0 155 409**

A1

## (12) EUROPEAN PATENT APPLICATION

(21) Application number: **84200384.0**

(22) Date of filing: **19.03.84**

(51) Int. Cl.⁴: **G 06 F 3/03**

(43) Date of publication of application:
**25.09.85 Bulletin 85 39**

(84) Designated Contracting States:
**AT CH DE FR GB IT LI NL**

(71) Applicant **Langella, Luigi
Via Spartaco, 38
I-20135 Milano(IT)**

(72) Inventor: **Langella, Luigi
Via Spartaco, 38
I-20135 Milano(IT)**

(74) Representative: **Mittler, Enrico
c/o Marchi & Mittler s.r.l. Viale Lombardi, 20
I-20131 Milano(IT)**

(54) **System for the automatic production of graphic music originals.**

(57) The system consists of a microcomputer (100) and input-output peripheral units (6-12). A peripheral graphic input unit (8) allows to introduce in the system the musical graphic signs relevant to notes, pauses and special indications, it also allows to introduce the instructions for the correct use of the graphic signs put in. A musical operative system permits to memorize in a floppy-disk (11, 12) the musical signs and instructions introduced; subsequently the musical operative system can interpret the memorized information and instructions and generate the graphic functions needed for the production of the original music. The graphic functions are performed through a plotter (7), or other equivalent system.

EP 0 155 409 A1

./...

Fig.1

"System for the automatic production of graphic music origi-
nals".

* * * * *

The invention concerns a system for the automatic production
of graphic music originals to be used for the printed reproduction of the so called "music scores" in a high number of copies. In view of its use a music original must naturally be
graphically perfect in each of its own parts, i.e. in musical
signs, in special signs and the accompanying alphanumerical
indications altogether.

The writing of music originals is presently done mostly
by using one or more of the following manual methods:

1) Cutting by punching of metallic surfaces (matrixes)

2) Use of transfers, that is signs pre-printed on a support
which are transferred by pressure

3) Drawing free-hand, or with the help of masks.

Such methods are so primitive to require highly specialized
personnel. It follows that the writing of even simple music
originals involves excessive costs and difficulties deriving
from frequent retouches and remakes.

Recently semi-automatic systems have been introduced that
allow the writing of music originals reducing the enormous
difficulties involved in the manual techniques.

A first type ·of semi-automatic system consists in a piano
(or organ) keyboard connected to a computer.

The acoustic signals sent by the organ are analyzed and
their physical characteristics (frequency, phase, duration,
etc.) are extracted; an alphanumerical keyboard introduces
in the computer the complementary information and the instructions needed by the computer. Secondly, the computer processes the memorized information and executes the music original through a peripheral graphic output unit (plotter).

The disadvantage of this system comes from its too high difficulty of utilization, since the piano keyboard operator must be an accomplished musician in order to "perform" the musical piece whose score is wanted. Besides, the musician who plays the keyboard must perform to perfection as far as the duration of the sound is concerned; otherwise the computer, in dubious cases, will makes choices that won't always be the expected ones. For these reasons this system is still experimental, and cannot be employed industrially.

A second semi-automatic system consists in an electric typewriter including eight vertical spaces which allow the positioning of notes within an octave without having to move the paper sheet. This system acts as a mere help to the previously mentioned manual techniques, as it only permits the writing of the most recurrent signs, without achieving the flexibility needed by an automatic system.

Purpose of the present invention is to realize a system for the production of music originals having the following characteristics:

1) it must be simple to use, and not require special musical knowledge from the user; 2) it must be comparatively unexpensive; 3) it must be especially flexible in the sense that it must allow the introduction of new graphic signs and special symbols as required by the new techniques of modern music.

Such purpose is realized by the present invention through a system for the automatic production of graphic music originals, formed by a microcomputer consisting of a central processing unit and a memory system for the memorization of data and programs and a set of peripheral input and output units, characterized in that one of said peripheral input units consists of a touch-sensitive organ and of a contact unit physically associable with different areas of said sensitive unit, such sensitive unit including a first area apt to the support of a music sheet for the selection of the co-ordinates of the musical graphic signs to be introduced in the music original, and a second area for the selection of said musical graphic signs and associated instructions.

One practical realization of the system according to the invention is described in detail hereunder, just as an example, with reference to the enclosed drawings where:

Fig. 1 represents the block diagram of a system according to the invention;

Fig. 2 represents a graphic input tablet (digitizer), which is part of said system;

Fig. 3 represents an example of musical graphic symbols with associated instructions, to be used in the tablet of Fig. 2:

Figs. 4-7 show some examples of representations of single notes, chords and groups of notes with chord.

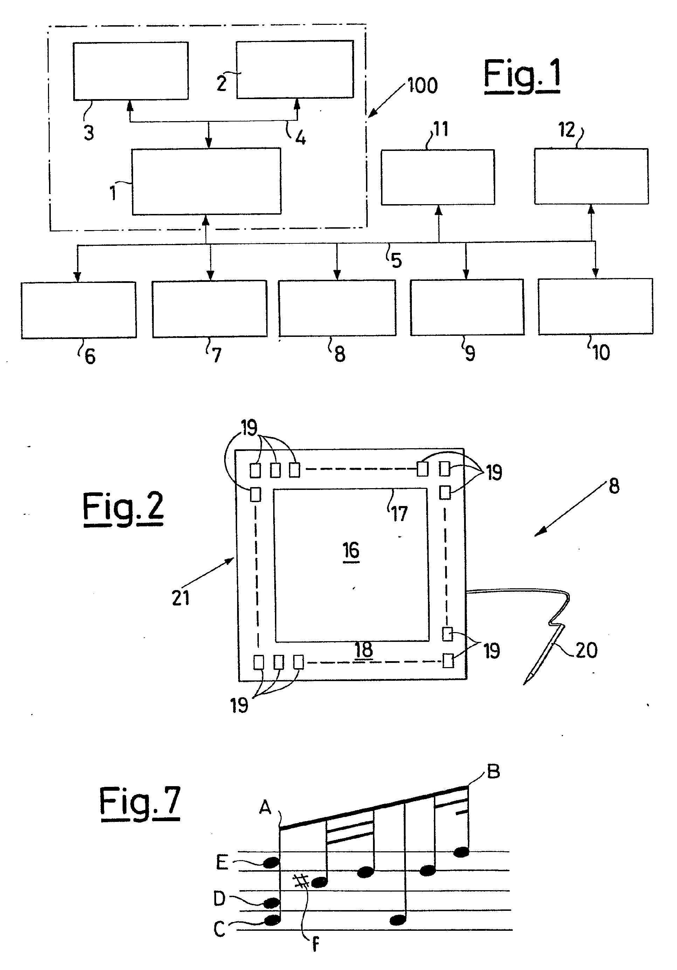

The system for the automatic production of originals represented in Fig. 1 consists of an electronic processor (microcomputer) 100 consisting of central processing unit CPU 1, a memory unit RAM 2, a read only memory EPROM 3 and a memory channel 4; to it are connected peripheral units 6 to 12 connected to CPU 1 through an input/output channel 5.

The mentioned microcomputer is, in general terms, of the type known in the art of personal computers and, more specifically, the one produced by Mostek Corporation can be employed, described in the manual titled "Z80 Microcomputer Systems FLP-80DOS Flexible Disk Operating System V 2.1 Publication No. MK78557. May 1979". In said manual are described details of the Operative System, which includes a Monitor and a set of programs.

Peripheral units 6 to 12 are also known in the art, being employed mainly in the scientific/technical field. They are: a graphic printer 6, a plotter 7, an input graphic tablet 8 (digitizer), a graphic video 9, an alphanumerical keyboard 10, and finally a couple of flexible disk units (floppy-disk) 11 and 12, which constitute the mass memory.

Peripheral graphic units which can be used for the system, according to the invention are for example:

- Graphic terminal WB 85 produced by Effegi DATA (Italy)
- Plotter BENSON 1201
- Graphic tablet (Digitizer) CALCOMP series 600 or 800.

The CPU unit 1, together with RAM 2 and EPROM 3, allows the microcomputer's operative system (DOS) to operate the whole system including peripheral units 6 to 12. The system according to the invention employs a second operative system of musical type (MELOS) which will be subsequently described.

The digitizer 8 (Fig. 2) includes a sensitive surface 21, carrying a number of musical graphic information, and a special sensitive pen 20 (referred to from now on as "stylus"), or other equivalent sensor, capable of converting said graphic information into numerical information representing the co-ordinates (x, y) of the point of sensitive surface 21, which is each time indicated by stylus 20.

The co-ordinates indicated by stylus 20 can be memorized in numerical form on the magnetic support (floppy-disk) of peripheral units 11-12.

Since during the writing of a musical page (input) it is necessary to specify both type of sign and position, sensitive surface 21 is divided into two areas:

- a central area 16, defined by rectangle 17, reserved to the music sheet (featuring a number of pentagrams) on which the co-ordinates of the musical signs to be introduced into the system are to be indicated;

- a peripheral area 18, including a series of sensitive areas 19 corresponding to respective musical graphic signs and instructions.

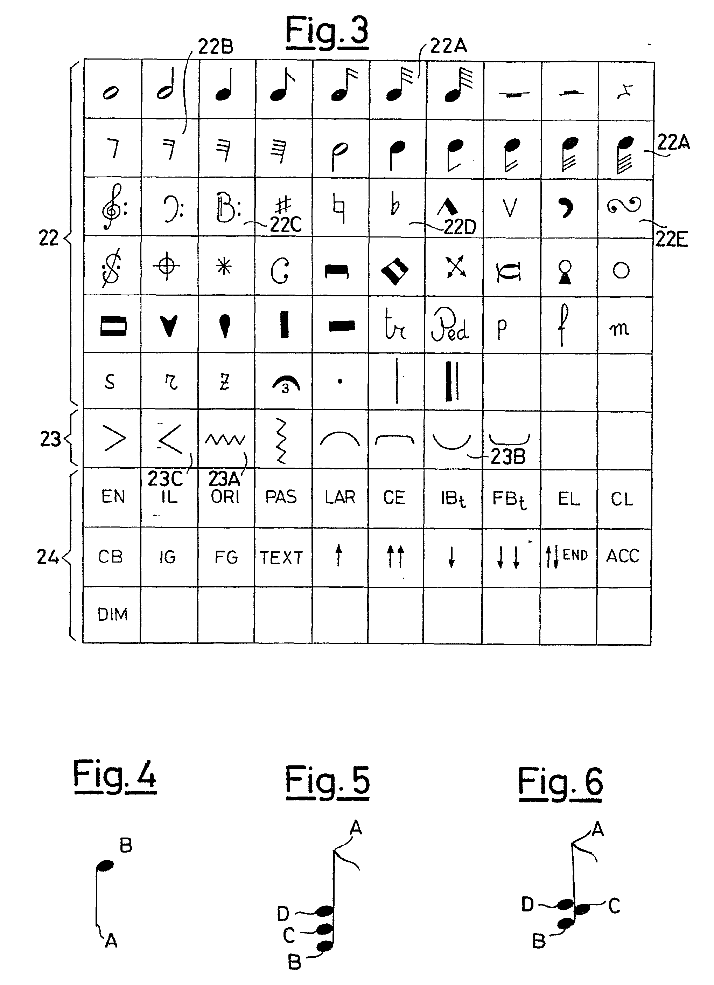

A non-limitative example of graphic signs and instructions which can be inserted in area 18 of the graphic tablet 8 is given in Fig. 3 and includes elementary graphic signs 22, complex graphic signs 23 and instructions 24.

The elementary graphic signs 22 consist of musical symbols of single note 22A, pause symbols 22B, symbols of clef 22C, symbols of alteration 22D and various other special symbols 22E.

The complex graphic signs 23 consist of musical symbols of trill 23A, of ligature 23B, of crescendo/diminuendo 23C.

Finally, instructions 24 are representative of associated logical functions, identified by the following initials:

EN  - End operation

IL  - Start line

ORI - Origin of pentagram

PAS - Height of pentagram

LAR - Width of pentagram

CE  - Delete last instruction set

IBt - Start bar

FBt    - End bar

EL     - End of line

CL     - Delete present line

CB     - Delete present bar

IG     - Start group of notes

FG     - End group of notes

TEXT  - Sets the system to operate with inputs both from tablet 8 and keyboard 10

ACC    - Chord. Indicates that the notes introduced must be written on the same vertical line (bar of the note).

NL     - New line

↑      - One octave up

↑↑     - Two octaves up

↓      - One octave down

↓↓     - Two octaves down

↓↓     - End of note shift. Resets the normal position on the pentagram

DIM    - Sets the machine to accept a definite length through co-ordinates in input.

The flexible discs magnetic units 11 and 12 (from now on referred to simply as floppy-disks) serve the purpose of memorizing the co-ordinates (x, y) and the codes of graphic signs 22, 23 and of instructions 24 introduced by stylus 20.

The high resolution peripheral graphic unit (plotter) 7 is employed by CPU 1 to control the writing of the music original. CPU 1 will employ to this purpose the information introduced in floppy disks 11 and 12 through the digitizer 8. Obviously plotter 7 can be replaced by an output unit of photographic type.

Graphic video 9 is employed for the visualization of notes

- 7 -

0155409

and music signs as they are fed in by the operator. This immediate check of the music introduced allows the correction of errors as soon as they are made, thus simplifying the production process of the originals.

Alphanumerical keyboard 10 allows the introduction of instructions relevant to the operative system (described in the publication mentioned earlier) and to the musical operative system MELOS; besides it also serves the purpose of answering the messages that bot of these operative systems send to the operator on graphic video 9.

Graphic printer 6 is employed for the production of proofs of the music originals, as being faster and less accurate than plotter 7, it allows to check rapidly whether the work introduced is correct or requires modifications.

As previously said, the system according to the invention employs an operative system of conventional type plus a second musical operative system called MELOS. The latter is assigned to the recording of the musical data and to this end it is set to accept the following operative instructions, introduced through the alphanumerical keyboard 10:

EX - starts the research of the appropriate recording space in the floppy-disk chosen for such operation

CO - executes the copy of a record from one floppy-disk to the other.

CR - creates in the floppy-disk the organization suitable for the recording of a number of music pages forming a musical work. This order must come before the EX command before starting a new work

ED - it allows to visualize and modify the executed recording

ST - visualizes the status of a work, giving its over-all data (number of pages written, number of pages deleted and so on)

EN - causes the machine to pass under the control of the musical operative system MELOS

RE - orders the reading, page by page, of a musical work and controls its printing or its visualization on the peripheral unit selected (graphic video 9, plotter 9, graphic printer 6).

There follows the following way of operating of the machine according to the present invention, ensured by the linking of the MELOS operative musical system to the DOS operative system.

Firstly, the operator lays and secures an empty music sheet on area 16 of tablet 21. The operator then sets on keyboard 10 the order of start work CR, followed by the order of research EX.

The recording of a music page can now start, effected through stylus 20 and tablet 21. More precisely, when the operator lays stylus 20 on a certain point of the central area 16 of tablet 21, an electric signal is generated representative of the corresponding co-ordinates of the pentagram, which is received and memorized by the microcomputer 100. When instead the stylus 20 is laid on a sensitive area 19 of peripheral area 18 of the tablet, an electric signal is generated which represents a musical symbol 22, 23, or an instruction 24. Proceeding this way, the various musical notes are recorded one at a time or in groups on the floppy-disk prepared to receive them. Naturally, the sequence of operations executed through stylus 20 and tablet 21 will be different according to whether it is required to record single notes or chords, groups of notes and so on.

As an example, if it is desired to record one single note, like the one shown in Fig. 4, it is necessary to press stylus 20 on the symbol 22A of area 18 of tablet 21 and subsequently on the spot of the appropriate co-ordinates (x, y) of area 16 of the same tablet. In case such note had a bar of non-standard size, it is then necessary to select in the following order (through stylus 20) the DIM order (24 in Fig. 3), the symbol of the desired duration (22B), the position of end of bar (A) and the position of the note (B).

If it was instead wanted to record a chord (i.e. a number of notes played simultaneously and therefore on one vertical bar) like the one shown in Fig. 5, the first note (B) is written by following the procedure explained earlier for the non-standard note, and then the positions of the other notes (C, D) are introduced following to the operation of order ACC. By doing so, all notes result with the same horizontal position. Eventual overlapping of notes is automatically avoided by the operative system MELOS, which takes care of shifting one or more notes to the opposite part of the vertical bar, as illustrated in Fig. 6.

It is also possible to record a group of notes with a chord, as the one shown in Fig. 7. In this case, the order of start group IG is given through stylus 20, then the co-ordinates of points A and B are introduced. Follows the introduction of the duration code, then the positions of the notes (C, D, E) of the chord, then again the "sharp" symbol (F) by selecting by stylus 20 the corresponding symbol and the relevant co-ordinates. Subsequently the notes which follow are introduced introducing before each of them the relevant duration sign. Finally, the group is closed by the order FG. The MELOS operative system then generates automatically, during the reproduction phase, both the slanting bar between points A and B of Fig. 7 and the parallel lines between the intermediate notes, by employing to this purpose suitable graphic functions with which it is equipped.

Other complex symbols, like the trill, the ligatures and the crescendo/diminuendos, can be also introduced and memorized through simple procedures, always consisting in the appropriate coupling of co-ordinates, graphic signs 22, 23 and instructions 24, all selected through stylus 20.

It is also foreseen that the procedures that have just been described for the single notes, chords and groups of notes can undergo variations without getting out of the limits of the present invention.

Having this way been executed the recording of one music page, and before going on to the recording of the following page, it is possible to visualize the introduced page through graphic video 9 or graphic printer 6, so as to correct the mistakes which might have occurred. The visualization is obtained by giving the signal ED through keyboard 10.

Having completed the recording of the whole sequence of pages, i.e. of the complete musical work, it is now possible to obtain the automatic writing of the music original - in technically perfect form - by plotter 7 (or other equivalent peripheral unit). The relevant order RE is given through keyboard 10 and gives access to the floppy-disk for the reading and reproduction of one music page at a time. The musical information contained in each page line are analyzed sequentially. For each sign to be printed, simple or complex, the position (x, y) is employed to cause the shift of the pen-nib of plotter 7 from the actual position to the starting position of the sign to be drawn. The code of the sign is used to have access to the corresponding graphic routine.

CLAIMS

1. System for the automatic production of graphic music originals, including a microcomputer (100) consisting of a central processing unit (1) and a memory system (2, 3) for the memorization of data and programs, and a set of peripheral memorization and input/output units (6-12), characterized in that one (8) of said peripheral input units consists of a touch-sensitive unit (21) and a contact unit (20) which can be physically associated to various areas of the mentioned sensitive unit (21) such sensitive unit (21) including a first area (16) designed to support a music sheet for the selection of the co-ordinates of the musical graphic signs to be introduced into the music original and a second area (18) for the selection of said musical graphic signs and associated instructions.

2. System according to claim 1, characterized in that said sensitive unit (21) consists of a flat tablet formed of a central area (16) for the selection of co-ordinates and a peripheral area (18) for the selection of said musical graphic signs and instructions, and said contact unit (20) consists of a stylus which can be engaged into contact with different areas of said sensitive unit (21).

3. System according to claim 1, including an operative system for the operation of said peripheral units (6-12), characterized in that it also includes a musical operative system for the recording of said co-ordinates and said musical graphic signs on a peripheral memory unit (11, 12) under the control of said associated instructions and for their reproduction on the music original.

4. System according to claim 3, characterized in that said peripheral memory unit (11, 12) is of the floppy-disk type.

5. System according to claim 3, characterized in that another of said peripheral input units consists of an alphanumeric keyboard (10) for the production of operative orders for said operative musical system.

6. System according to claim 1, characterized in that one of said peripheral output units consists of a plotter (7) for the writing of the music original.

7. System according to claim 1, characterized in that another of said peripheral output units consists of a graphic printer (6) for the production of proofs of the music original.

8. System according to claim 1, characterized in that still another of said peripheral output units consists of a graphic video (9) for the progressive visualization of the musical data during the phase of recording.

0155409

Fig.1

Fig.2

Fig.7

Fig.3

Fig.4

Fig.5

Fig.6

**European Patent Office**

**EUROPEAN SEARCH REPORT**

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| Y | GB-A-1 268 382  (NATIONAL RESEARCH DEVELOPMENT CORP.) <br> * Page  1, line  9 - page 2, line 6; figures 1,2 * | 1-3,5-8 | G 06 F    3/03 |
| Y | US-A-3 720 948  (EICHEN et al.) <br><br> * Abstract;  figures 1,2; column 1,  line  5  -  column 3, line 5; column 7, line 1 - column 8, line 40 * | 1-3,5-8 | |
| A | GB-A-2 064 851  (CHARLES CHRISTOPHER ROWE) <br> * Abstract;  figure  1;  page 2, line 23 - page 3, line 4 * | 1,3,5,7,8 | |
| A | FR-A-2 409 567  (P.A.L. FOURREAU) <br> * Figures  1,2; page 2, line 1 - page 3, line 6; claims 1-3 * | 1-3,5 | **TECHNICAL FIELDS SEARCHED (Int. Cl.4)** <br><br> G 06 F <br> B 41 J <br> G- 10 G    3/04 |
| A | EP-A-0 087 949  (FANUC LTD.) <br><br> * Figures 1,7,13,19; claims 1-6 * | 1,2,6,8 | |

The present search report has been drawn up for all claims

| Place of search <br> THE HAGUE | Date of completion of the search <br> 06-11-1984 | Examiner <br> BECKER K.H. |
|---|---|---|